# FASCICULE DE BREVET EUROPEEN

(11) **EP 0 947 380 B1**
(45) Date de publication et mention de la délivrance du brevet: **06.05.2004**
(21) Numéro de dépôt: 99400781.3
(22) Date de dépôt: 30.03.1999
(51) Int. Cl.: B60N 2/00, B60N 2/08

(54) **Dispositif de crémaillère rapportée en fond de glissière**
Auf dem Schienenboden eingebaute Zahnstangenvorrichtung
Rack device built on the rail bottom

(30) Priorité: 30.03.1998 FR 9803923
(43) Date de publication de la demande: 06.10.1999
(73) Titulaire: Renault s.a.s., 92100 Boulogne Billancourt (FR)
(72) Inventeur: Souville, Philippe, 78180 Montigny le Bretonneux (FR)

(56) Documents cités:
- EP-A- 0 615 879
- EP-A- 0 818 344
- FR-A- 2 728 860
- US-A- 2 589 922
- US-A- 5 236 153

## Description

L'invention propose un dispositif pour le réglage de la position longitudinale, et le blocage en position réglée, d'un sous ensemble, notamment d'un siège, sur le plancher horizontal de l'habitacle d'un véhicule automobile.

L'invention concerne plus particulièrement un dispositif pour le réglage de la position longitudinale, et le blocage en position réglée, sur le plancher horizontal de l'habitacle d'un véhicule automobile équipé de deux glissières parallèles, d'un sous-ensemble, notamment d'un siège de véhicule automobile, comportant des pieds d'orientation sensiblement verticale reçus en coulissement longitudinal par les glissières, dont au moins un pied comporte des leviers de guidage des déplacements longitudinaux et de verrouillage en position réglée, pivotant au voisinage de leur extrémité supérieure autour d'un axe longitudinal d'articulation porté par le pied, et du type dans lequel l'extrémité inférieure du pied est équipée d'un plongeur mobile verticalement et commandant les déplacements transversaux des leviers entre :
- une première position extrême, dite d'engagement ou de dégagement, dans laquelle les deux leviers de verrouillage, à action symétrique et opposée par rapport à un plan longitudinal médian, sont dans une position escamotée vers l'intérieur dans laquelle leur encombrement transversal permet l'introduction ou l'extraction verticale du pied dans la glissière à travers une fente longitudinale médiane de cette dernière délimitée par deux ailes supérieures longitudinales et parallèles de la glissière ;
- et une seconde position extrême, dite de verrouillage, dans laquelle les deux leviers de verrouillage s'étendent chacun transversalement vers l'extérieur en regard d'une portion interne de l'une des ailes supérieures de la glissière et avec laquelle ils coopèrent par accrochage, pour immobiliser verticalement et longitudinalement le pied par rapport à la glissière ;
- en passant par au moins une position intermédiaire, dite de réglage, dans laquelle les deux leviers de verrouillage s'étendent chacun transversalement vers l'extérieur en regard de ladite portion interne de l'une des ailes supérieures de la glissière, pour retenir verticalement le pied par rapport à la glissière et permettre des déplacements longitudinaux du pied par rapport à la glissière.

Selon une conception connue du document FR-A-2.728.860, il a déjà été proposé d'aménager des séries de points d'accrochage sur le plancher du véhicule, dont chacune, comportant de préférence quatre points d'accrochage pour les quatre pieds du siège ou du sous-ensemble, détermine une position de montage et de fixation.

Afin d'accroître la modularité de l'aménagement de l'habitacle, il a déjà été proposé un dispositif qui est par exemple décrit et représenté dans le document US-A-5.236.153 (correspondant au preambule de la revendication indépendante), dans lequel le plancher horizontal de l'habitacle d'un avion est équipé d'au moins deux rails ou glissières parallèles qui reçoivent en coulissement longitudinal des organes qui guident des déplacements longitudinaux d'un siège et qui permettent d'assurer un verrouillage en position longitudinale réglée et un verrouillage vertical du siège pour l'insérer ou l'extraire verticalement de la glissière, le siège comportant des pieds d'orientation sensiblement verticale dont les extrémités inférieures comportent des moyens, expansibles transversalement, de guidage et de verrouillage longitudinal et vertical.

Cette solution permet d'accroître la modularité de l'habitacle qui reçoit les sièges.

Toutefois, cette conception fait appel à des moyens expansibles délicats à utiliser. En effet, chaque extrémité de pied de siège comporte deux pênes d'orientation sensiblement longitudinale, articulés autour d'un pivot d'axe longitudinal mobile verticalement, pour déplacer sélectivement des extrémités supérieures et inférieures des pênes, de sorte qu'elles coopèrent sélectivement avec des zones respectivement supérieures et inférieures de la glissière associée, de façon à assurer des fonctions de guidage, verrouillage ou déverrouillage longitudinal par coincement, et de verrouillage vertical ou d'extraction par coincement ou relâchement.

Si cette conception permet une grande modularité d'un habitacle d'avion, elle ne peut en revanche être appliquée à un habitacle d'automobile pour lequel les impératifs d'immobilisation des sièges sont beaucoup plus draconiens.

En effet, en cas de brutale décélération ou de choc, les sièges doivent rester rigoureusement immobiles par rapport à leurs glissières, pour éviter que les passagers ne soient projetés dans l'habitacle. L'éventualité d'un choc, absente dans le cas d'un avion, interdit donc l'emploi de procédés de verrouillage longitudinal par coincement.

De plus, le siège ayant des dimensions verticales importantes, son système de fixation doit être conçu de façon à pouvoir résister à un arrachement non simultané des pieds. Si, pour une raison quelconque, et à titre d'exemple, un seul pied est arraché, il apparaît un effort de cisaillement sur les autres pieds qui est plus important que si tous les pieds étaient intacts, et l'ensemble de la fixation du siège est fragilisé. En cas de choc, si les moyens de guidage et de verrouillage du siège se situent dans un même plan horizontal, le siège formant bras de levier, les accélérations longitudinales du siège et du passager exercent sur les fixations des sièges un couple de cisaillement d'axe transversal qui risque de provoquer une rupture de celles-ci, l'effort de rupture étant entièrement concentré dans cette zone. Il est donc préférable de décaler verticalement les fonctions de guidage et de verrouillage du siège de façon à pouvoir opposer un couple résistant à un éventuel couple de cisaillement et de rupture.

Enfin, la solution proposée dans ledit document US-A-5.236.153 ne prévoit pas de position intermédiaire au sens de l'invention dans la mesure où la conception proposée n'est pas prévue pour être manipulée quotidiennement par les passagers, qui risquent d'oublier de verrouiller le siège, mais seulement par des professionnels qui aménagent l'habitacle du véhicule.

Pour répondre à ces impératifs, l'invention propose une nouvelle conception d'un dispositif de réglage du type mentionné précédemment qui permet de remédier aux inconvénients précités.

Dans ce but, l'invention propose un dispositif caractérisé en ce que le plongeur comporte à son extrémité inférieure un ergot qui est reçu entre des dents d'une crémaillère formée dans le fond de la glissière pour immobiliser longitudinalement le pied en position de verrouillage.

Selon d'autres caractéristiques de l'invention :
- la crémaillère est rapportée et est une pièce en tôle, fixée par des vis, des pions ou par soudage sur le fond de la glissière ;
- le plongeur comporte deux bras coudés vers le bas, symétriques par rapport au plan longitudinal médian, et coopérant chacun avec deux pattes de chaque levier de verrouillage pour commander leur rotation autour de leur axe longitudinal ;
- chaque levier comporte une patte supérieure longue et coudée vers le plongeur dont une face en regard du plongeur est repoussée vers l'extérieur par une face extérieure du bras du plongeur pour ramener vers l'intérieur une patte inférieure du levier correspondant à une position d'engagement ou de dégagement du pied ;
- chaque levier comporte une patte intermédiaire courte et droite dont une face opposée au plongeur est tirée vers l'intérieur par une face intérieure du bras du plongeur pour amener vers l'extérieur du pied la patte inférieure du levier en position de réglage ou de verrouillage ;
- la patte intermédiaire courte et droite du levier est bloquée verticalement par un coude du bras du plongeur pour maintenir la patte intermédiaire ramenée vers l'intérieur de sorte que la patte inférieure du levier est maintenue repoussée vers l'extérieur lorsque l'ergot du plongeur est reçu entre les dents de la crémaillère pour maintenir le pied en position de verrouillage ;
- le dispositif comporte au moins un loquet de blocage en dégagement, qui s'étend, dans un plan transversal décalé axialement par rapport aux leviers, qui est monté pivotant au voisinage de sa partie centrale autour d'un axe parallèle à l'axe longitudinal d'articulation des leviers, qui est rappelé élastiquement vers une position de repos, et qui comporte une patte inférieure de commande prenant appui, lorsque le pied est dans la glissière, sur une face supérieure d'une aile pour amener en position escamotée vers le plan longitudinal médian une patte supérieure de blocage, qui dans sa position de repos s'étend en regard d'une portion du bras associé du plongeur pour le bloquer en position haute ;
- le plongeur comporte deux bras horizontaux symétriques par rapport au plan longitudinal médian, et coopérant avec des pattes supérieures des leviers de verrouillage pour commander leur rotation autour de leur axe longitudinal et leur déplacement transversal ;
- les leviers comportent les pattes supérieures dont des faces en regard du plongeur sont chacune munie de trois zones de contact supérieure, intermédiaire et inférieure, correspondant à trois positions transversales des pattes inférieures des leviers lorsque des touches situées aux extrémités des bras du coulisseau sont en appui sur lesdites zones de contact ;
- lorsque les touches des bras du coulisseau y sont en appui,
la zone de contact supérieure, située aux extrémités supérieures des pattes supérieures des leviers, correspond à un déplacement vers l'extérieur des pattes supérieures des leviers, et provoque le déplacement transversal vers l'intérieur des pattes inférieures des leviers pour extraire le pied,
la zone de contact intermédiaire, située au milieu des pattes supérieures des leviers correspond à un déplacement transversal intermédiaire des pattes supérieures des leviers, et positionne les pattes inférieures des leviers suivant une position transversale intermédiaire pour permettre le déplacement longitudinal du pied en l'immobilisant verticalement,
la zone de contact inférieure, située aux extrémités inférieures des pattes supérieures des leviers, correspond à un déplacement transversal vers l'intérieur des pattes supérieures des leviers, et provoque le déplacement vers l'extérieur des pattes inférieures des leviers pour immobiliser verticalement le pied quand l'ergot du coulisseau est reçu entre les dents de la crémaillère ;
- la patte inférieure de chaque levier de verrouillage comporte une partie inférieure active qui est de profil longitudinal complémentaire du profil de la portion interne d'une aile de la glissière ;
- la partie inférieure active de la patte inférieure de chaque levier est conformée en un crochet qui coopère avec la portion interne d'accrochage de l'aile pour immobiliser le pied verticalement ;
- les leviers de verrouillage sont rappelés élastiquement vers leur position extrême de verrouillage par un ressort qui rappelle le coulisseau vers le bas ;
- la glissière, les leviers, et le plongeur sont des pièces réalisées à partir de profilés tronçonnés à la longueur adéquate.

D'autres caractéristiques et avantages de l'invention apparaîtront à la lecture de la description détaillée qui va suivre pour la compréhension de laquelle on se reportera aux dessins annexés dans lesquels :
- la figure 1 est une vue en perspective d'une glissière comportant une crémaillère suivant l'invention ;
- la figure 2 est une vue en coupe transversale d'une glissière en variante comportant une crémaillère réalisée suivant l'invention ;
- la figure 3 est une vue en coupe transversale d'un dispositif conforme à un premier mode de réalisation de l'invention représenté en position de verrouillage longitudinal ;
- la figure 4 est une vue selon la figure 3 représentant le dispositif en position de réglage longitudinal ;
- la figure 5 est une vue selon la figure 3 représentant le dispositif en position de dégagement du pied, avant extraction ;
- la figure 6 est une vue selon la figure 3 représentant le dispositif en position de dégagement du pied, après extraction ;
- la figure 7 est une vue selon la figure 3 représentant le dispositif muni de son loquet de blocage en dégagement en position de repos ;
- la figure 8 est une vue selon la figure 7 représentant le loquet de blocage en dégagement en position de repos ;
- la figure 9 est une vue en coupe transversale d'un dispositif conforme à un deuxième mode de réalisation de l'invention représenté en position de verrouillage longitudinal ;
- la figure 10 est une vue selon la figure 9 représentant le dispositif en position de réglage longitudinal ;
- la figure 11 est une vue selon la figure 9 représentant le dispositif en position de dégagement du pied, avant extraction ;
- la figure 12 est une vue selon la figure 9 représentant le dispositif en position de dégagement du pied, après extraction ; et
- la figure 13 est une vue en perspective représentant un dispositif réalisé selon un procédé de fabrication en pièces étirées, pliées ou extrudées.

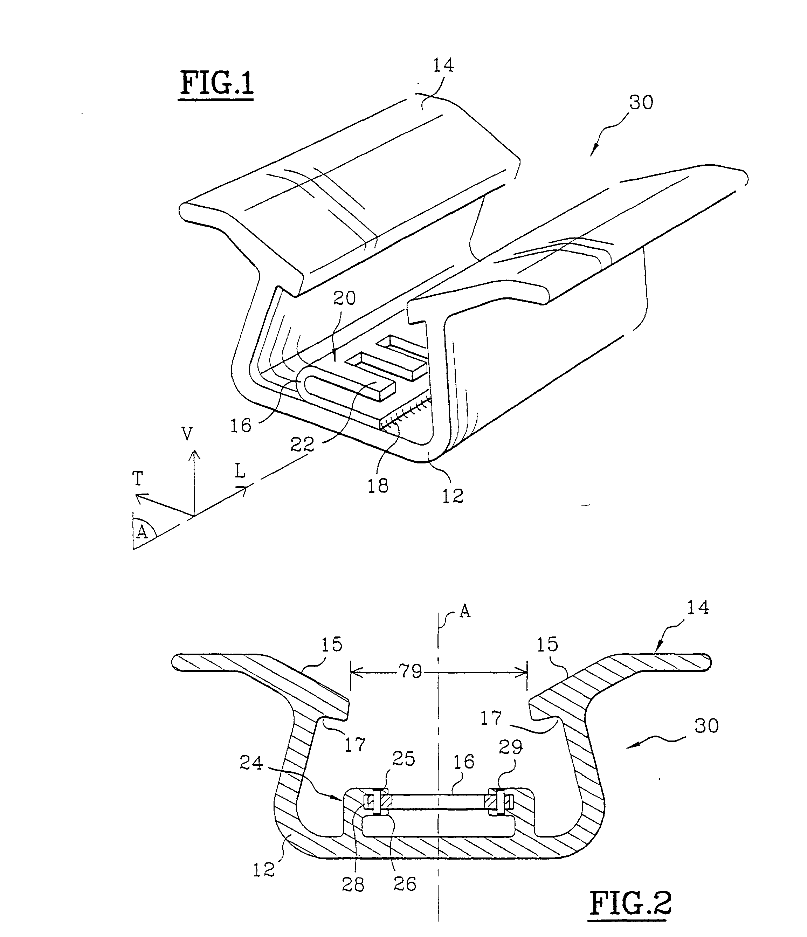

On voit sur la figure 1 une glissière 30 d'un dispositif de réglage conforme à l'invention. De manière connue, la glissière 30 prend place sur le plancher horizontal (non repr.ésenté) de l'habitacle d'un véhicule automobile, suivant une direction sensiblement longitudinale, représentée par la flèche L. La glissière 30 est constituée d'une barre en profilé 12, sensiblement en forme de U, et ouverte en direction de la verticale V. Aux extrémités des branches du profil en U du profilé 12, deux ailes supérieures opposées 14, venues de matière avec le profilé 12, s'étendent longitudinalement selon la direction L de la glissière 30 et sont inclinées vers le bas de la glissière 30 dans la direction transversale T. La glissière 30 comporte au fond du profilé 12 en U une crémaillère 16 qui s'étend longitudinalement sur toute la longueur de la glissière 30, et qui est fixée au fond du profilé 12, par exemple par des cordons de soudure 18.

La crémaillère 16 comporte des dents 20 qui s'étendent transversalement et sont espacées longitudinalement à intervalles réguliers. La glissière 16 est disposée au fond du profilé 12 de sorte que les parties actives 22 des dents 20 soient situées transversalement suivant T de part et d'autre d'un plan médian vertical A.

La figure 2 illustre un second mode de réalisation de la glissière 30. Conformément à l'invention, le profilé 12 comporte au fond de sa section en U deux branches verticales 24 qui s'étendent verticalement et longitudinalement sur toute la longueur de la glissière 30. Les branches 24 comportent deux faces 26, orientées vers le plan A médian de la glissière 30, dans la surface desquelles sont formées des rainures opposées 28, les faces 26 et les rainures 28 s'étendant longitudinalement sur toute la longueur de la glissière 30. Les rainures 28 reçoivent une crémaillère 16, constituée d'une plaque en tôle emboutie et découpée, et maintenue longitudinalement dans les rainures 28 par des pions verticaux 29. Lors de l'assemblage de la crémaillère 16 dans la glissière 30, la crémaillère 16 est enfilée longitudinalement dans les rainures 28, puis fixée à l'aide des pions 29.

Quel que soit le mode de réalisation de la crémaillère 16, les ailes supérieures 14 de la glissière 30 comportent deux faces supérieures 15 inclinées vers le bas en direction du plan vertical médian de la glissière 30, et comportent sur leurs faces intérieures des angles arrondis 17 au niveau de la jonction avec les parois latérales verticales de la forme en U du profilé 12.

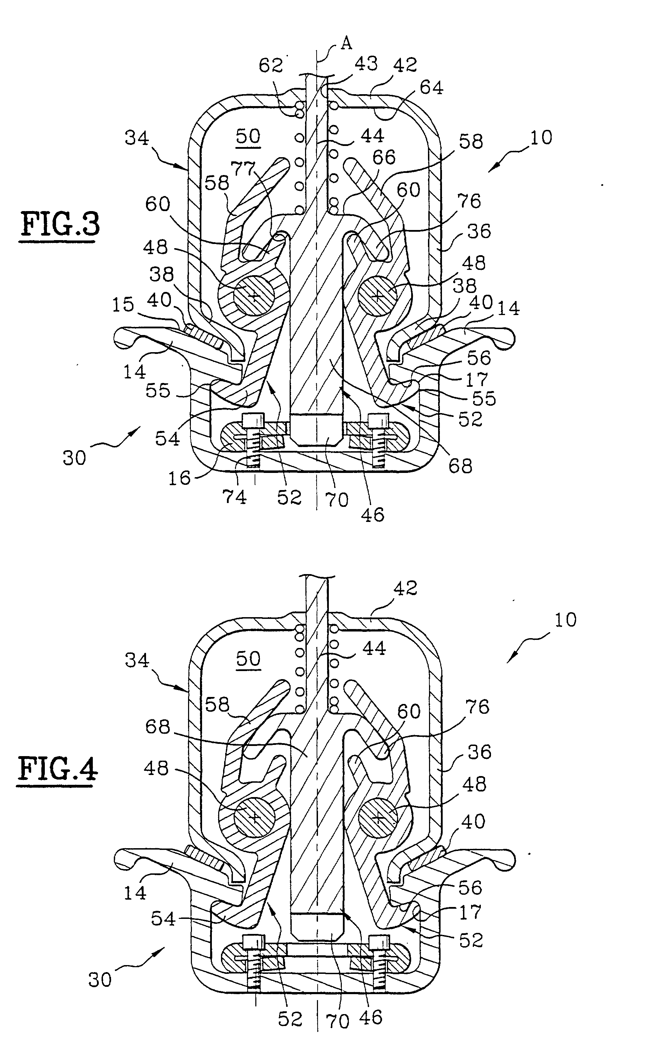

Ces deux modes de réalisation sont particulièrement avantageux car ils permettent de réaliser une glissière, décrite ultérieurement en référence aux figures 3 à 13, à partir d'un profilé 12 sur lequel est rapportée une crémaillère 16 fixée simplement à la glissière 30. La simplicité des formes des pièces permet d'une part de les réaliser par un procédé quelconque de découpe ou de déformation plastique, et permet d'automatiser le soudage de la crémaillère 16 décrite selon le mode de réalisation de la figure 1 ou la fixation des pions 29 de la crémaillère 16 décrite à la figure 2 lors de la fabrication industrielle de la glissière 30, ces deux procédés permettant d'abaisser sensiblement les coûts de fabrication.

Conformément à un premier mode de réalisation de l'invention, le dispositif de réglage 10 illustré en référence à la figure 3 comporte la glissière 30 du type de celles précédemment décrites et un pied 34 d'orientation sensiblement verticale qui est reçu en appui entre les ailes 14 de la crémaillère 11. Le pied 34 est solidaire d'un sous-ensemble (non représenté) de l'aménagement intérieur du véhicule, par exemple d'un siège du véhicule ou d'une tablette.

Le pied 34 comporte un boîtier 36 dont deux ailes latérales inférieures 38, s'étendant sensiblement longitudinalement sont en appui sur les faces supérieures 15 des ailes 14 par l'intermédiaire de patins 40 en matériau à faible coefficient de frottement, solidaires du pied 34. Avantageusement, la disposition des patins 40 sur les ailes latérales inférieures 38 permet, par opposition à une solution qui consisterait à garnir les faces supérieures 15 d'un matériau similaire, de réduire la longueur de patin employée, et donc de réduire les coûts de fabrication.

Les ailes latérales inférieures 38 du boîtier 36 sont légèrement inclinées vers le bas, comme les faces supérieures 15 des ailes 14, et elles assurent un bon appui vertical et un centrage transversal du boîtier 36 du pied 34 dans la glissière 30.

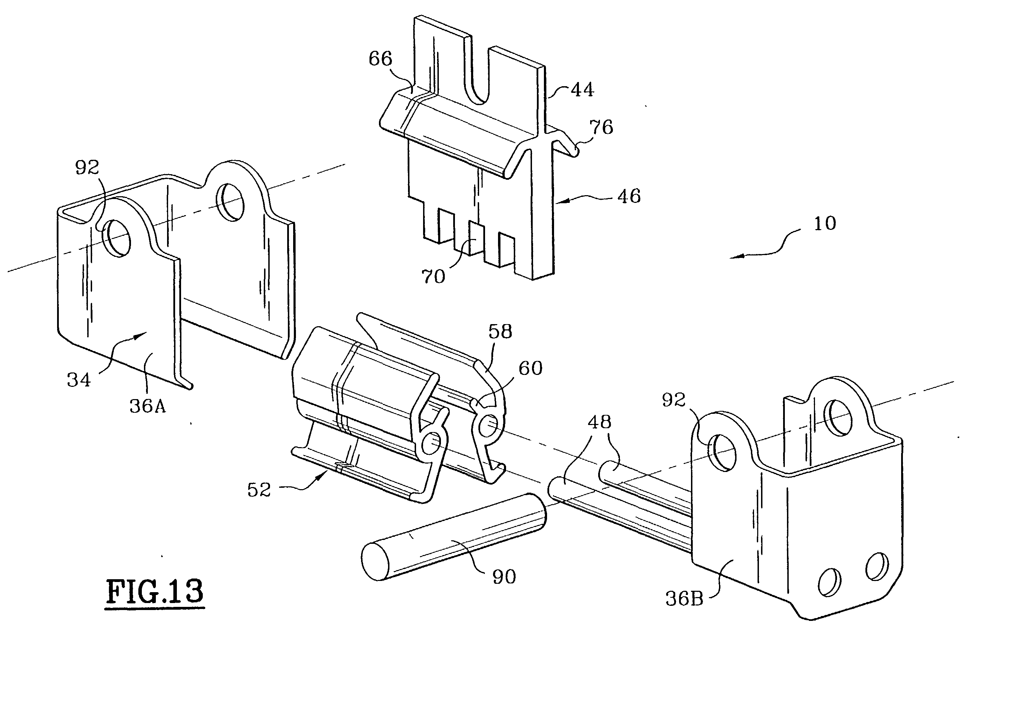

Avantageusement, le boîtier 36 est réalisé en tôle pliée, permettant ainsi de réduire les coûts de fabrication du dispositif 10, dont le détail sera décrit en référence à la figure 13.

Dans sa face supérieure horizontale 42, le boîtier 36 est percé d'un trou 43 d'axe vertical qui autorise le passage d'une tige verticale 44 de commande d'un plongeur 46 décrit ultérieurement. Le boîtier 36 porte deux axes longitudinaux 48 situés de part et d'autre du plan vertical médian A du boîtier 36, et qui sont fixés au boîtier 36 sur ses parois transversales 50 avant et arrière, situées en avant et arrière du plan de coupe des figures. Les axes longitudinaux 48 reçoivent chacun en rotation deux leviers de verrouillage 52 susceptibles de pivoter autour des axes 48 pour se déplacer angulairement suivant différentes positions, décrites ultérieurement.

Les leviers de verrouillage 52 sont symétriques par rapport au plan A et comportent des pattes inférieures 54, conformées en crochets, et destinées à coopérer avec une portion interne des ailes 14 dont les faces inférieures internes 56 et les angles arrondis 17 permettent d'immobiliser verticalement le boîtier 36 par rapport à la glissière 30. Pour ce faire, des parties inférieures actives 55 des pattes inférieures 54 s'étendent transversalement vers l'extérieur pour être reçus par les angles arrondis 17 et par les faces internes 56 des ailes 14.

Les leviers 52 comportent chacun une patte supérieure longue 58 et une patte intermédiaire courte 60, dont la fonction sera décrite ultérieurement, qui sont situées au dessus du plan horizontal passant par les axes 48, et qui sont symétriques par rapport au plan A et inclinées vers le plan A.

Le trou 43 de la face supérieure 42 se prolonge par un alésage à l'intérieur du boîtier 36 et reçoit en coulissement l'axe de commande 44 du plongeur 46. Le plongeur 46 est rappelé élastiquement vers le bas par un ressort hélicoïdal de compression 62 en appui sur une face supérieure intérieure 64 du boîtier 36 et une face d'extrémité supérieure 66 du corps 68 du plongeur 46.

Le corps 68 comporte à son extrémité inférieure un ergot ou doigt 70 destiné à coopérer avec une crémaillère 16 qui, à la figure 3 , est réalisée selon un troisième mode de réalisation de crémaillère. La crémaillère 16 est, dans ce mode de réalisation, réalisée d'une tôle pliée fixée au fond du profilé 12 par des vis 74.

Au niveau de son extrémité supérieure 66, le corps du plongeur 68 comporte deux bras symétriques 76, inclinés vers le bas et vers l'extérieur, et destinés à coopérer avec les pattes supérieures longues 58 et les pattes intermédiaires courtes 60 des leviers 52 entre lesquelles sont reçus les bras 76.

La figure 3 illustre le dispositif 10 en position verrouillée. Dans cette configuration, le plongeur 46 est maintenu en position basse par l'action du ressort de rappel 62 de sorte que l'ergot 70 est reçu entre les dents 20,22 de la crémaillère 72. Le dispositif 10 est ainsi immobilisé longitudinalement. Les bras 76 du corps de plongeur 68, dont l'inclinaison vers le bas définit des coudes 77, reçoivent dans lesdits coudes 77 les pattes intermédiaires courtes 60 des leviers 52, pour les rapprocher du plan médian A de sorte que les pattes inférieures 54 des leviers 52 sont repoussées en rotation vers l'extérieur et coopèrent par accrochage avec la face interne 56 et l'angle arrondi 17 des ailes 14 afin d'immobiliser verticalement le pied 34.

L'orientation vers le bas des faces internes 56 des ailes 14 et des pattes inférieures 54 des leviers 52 induit un effort de retenue qui a une composante verticale et une composante transversale; ce qui permet avantageusement de prévenir tout débattement transversal du pied 34. Dans cette configuration, les parties inférieures actives 55 des leviers 52 sont verticalement en butée contre la face inclinée 56 des ailes 14 et transversalement dans l'angle arrondi 17 des ailes 14, de sorte qu'un jeu (non représenté) subsiste entre les pattes intermédiaires courtes 60 et les bras 76 du plongeur 46 au niveau des coudes 77.

De cette manière, le ressort 62 permet d'assurer un rattrapage du jeu, puisque dans le cas d'un éventuel mouvement transversal des pattes inférieures 54 des leviers 52 vers le plan médian A du dispositif 10, le ressort 62 peut ramener les pattes intermédiaires courtes 60 des leviers 52 vers le plan médian A pour annuler le jeu précité et ramener les pattes inférieures 54 des leviers 52 en butée.

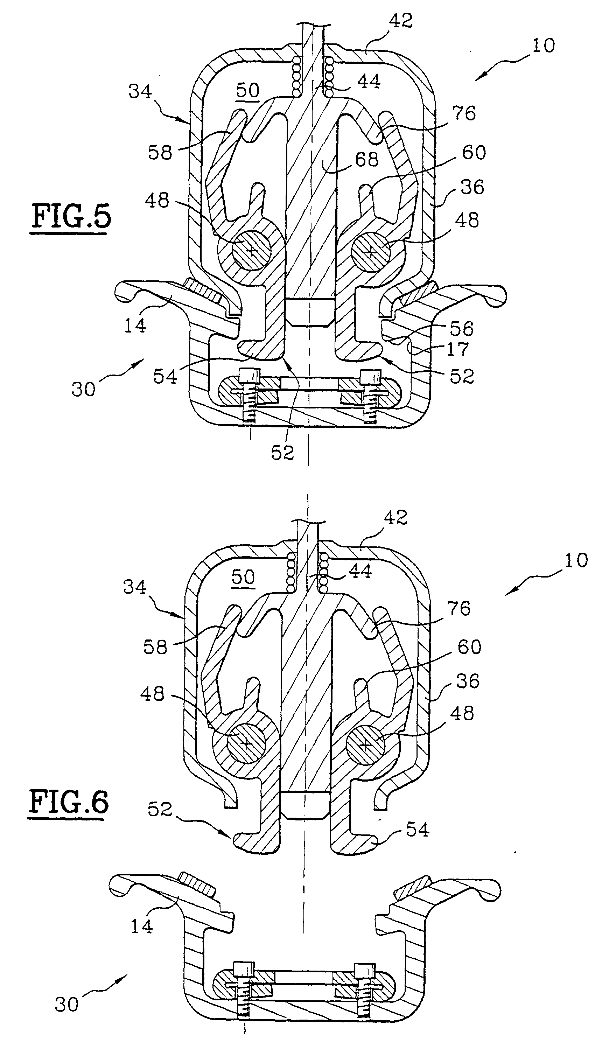

Sur la vue de la figure 4, la tige de commande 44 du plongeur 46 est tirée vers le haut par un utilisateur en surmontant l'effort antagoniste du ressort 62 pour placer le dispositif 10 en configuration de réglage longitudinal.

Dans cette configuration, l'ergot 70 du plongeur 46 quitte la crémaillère 16 de sorte que le pied 34 n'est plus immobilisé longitudinalement. Le plongeur 46, en s'élevant, libère les pattes intermédiaires courtes 60 des leviers 52 des coudes 77 des bras de plongeur 76. Les bras de plongeur 76 remontent et leurs faces supérieures viennent en appui sur les faces inférieures des pattes supérieures longues 58 des leviers 52 qui, dans un plan transversal, sont inclinées du même angle que les bras 76 du plongeur 46, de sorte que l'effort appliqué par un utilisateur provoque uniquement la remontée du plongeur 46 et de l'ergot 70 sans relâcher les pattes inférieures 54 des leviers 52 hors des angles arrondis 17 et de la face interne 56 des ailes 14.

De cette manière, le boîtier 36 étant toujours retenu verticalement, en coopération avec les ailes 14 par l'intermédiaire des patins 40 en matériau à faible coefficient de frottement et de la face interne 56, le dispositif 10 est à même de coulisser longitudinalement tout en étant maintenu verticalement et il permet ainsi la fonction de réglage de la position du sous-ensemble ou du siège du véhicule.

Lorsque l'utilisateur poursuit son action sur la tige de commande 44 du plongeur 46 vers le haut, le dispositif 10 est placé en position d'extraction.

En effet, dans cette configuration représentée à la figure 5, les bras 76 du plongeur 46 écartent vers l'extérieur les pattes supérieures longues 58 des leviers 52 qui pivotent autour de leurs axes 48 pour ramener vers l'intérieur les pattes inférieures 54 en libérant lesdites pattes 54 hors des faces internes 56 et des angles arrondis 17 des ailes 14. Les pattes inférieures 54 des leviers 52 viennent alors en butée contre le corps 68 du plongeur 46 et l'encombrement transversal du dispositif 10 au niveau des pattes inférieures 54 est inférieur à la largeur de la fente transversale 79, illustrée à la figure 2, et délimitée par les bords en vis-à-vis des ailes 14.

La figure 6 illustre la phase finale de l'extraction du pied 34 de la glissière 30. En maintenant le levier de commande 44 du plongeur 46 tiré vers le haut, l'encombrement transversal réduit des pattes inférieures 54 des leviers 52 est maintenu et il est possible d'extraire le pied 34 de la glissière 30.

Cette possibilité est particulièrement avantageuse car elle permet d'accroître la capacité de chargement du véhicule en enlevant ses sièges, ou de moduler au gré de l'utilisateur les sous-ensembles qui composent son aménagement intérieur, par exemple en permutant plusieurs de ces sous-ensembles entre eux, ou en les retournant, cette possibilité étant particulièrement intéressante lorsqu'il s'agit de sièges, car on peut ainsi créer un espace convivial pour les passagers du véhicule.

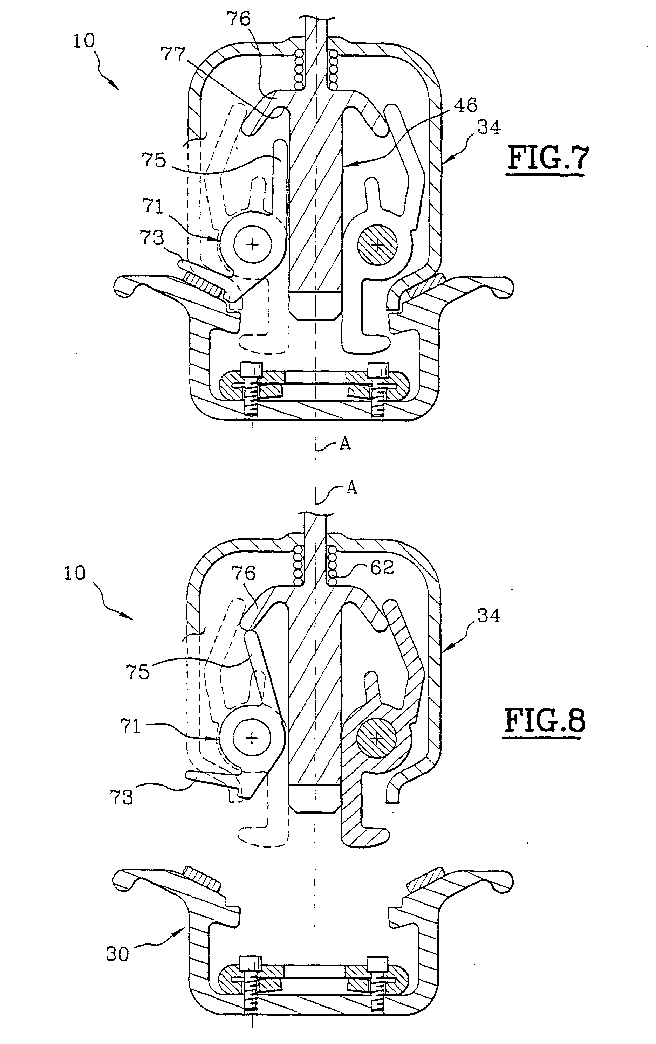

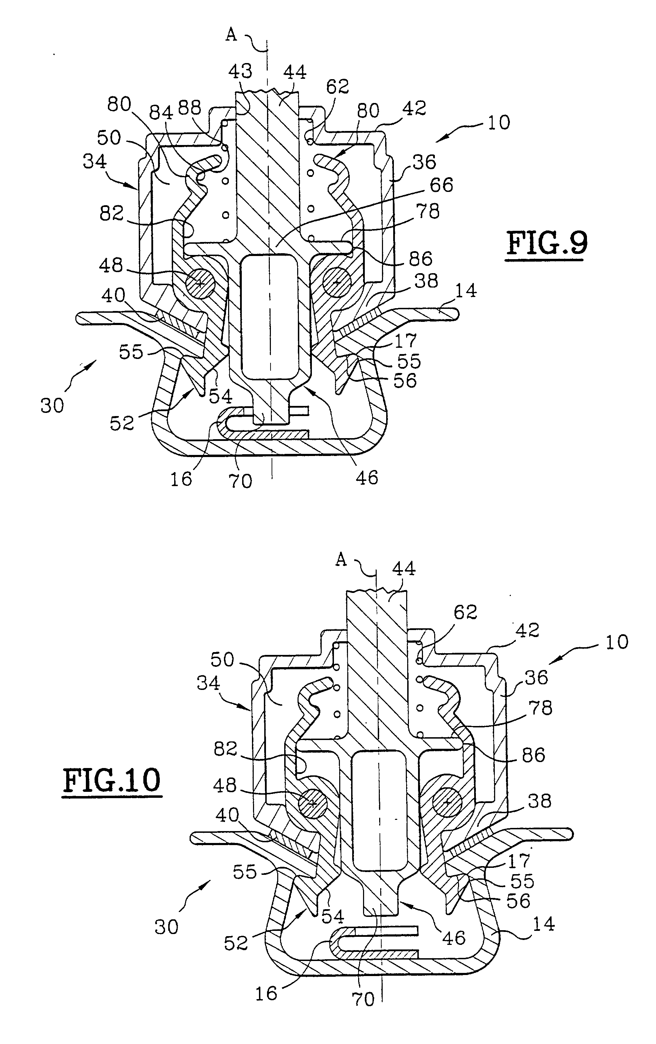

Les figures 7 et 9 présentent le fonctionnement d'un loquet 71 de blocage en dégagement, conformément à l'invention.

Le loquet 71 de blocage en dégagement est monté pivotant sur les axes longitudinaux d'articulation 48 et est situé dans un plan longitudinal décalé par rapport au plan de coupe décrit en référence aux figures 3 à 6.

Comme l'illustre la figure 7, il comporte, dans une partie inférieure, une patte de commande 73 sensiblement transversale, qui est, lorsque le pied 34 est reçu dans la glissière 30, en appui sur une face supérieure 15 d'une aile 14 et d'une inclinaison similaire. Dans une partie supérieure, il comporte une patte supérieure de blocage 75, sensiblement verticale, qui, lorsque le pied 34 est reçu dans la glissière 30, est escamotée vers le plan médian longitudinal A du dispositif 10, de sorte que ladite patte supérieure d'indexation est disposée en dessous du coude 77 du bras 76 du plongeur 46 et n'interfère pas avec lui.

Comme l'illustre la figure 8, lorsque le pied 34 est dégagé de la glissière 30, des moyens de rappel élastique (non représentés) ramènent la patte d'appui 73 en position de repos vers le plan A et la patte supérieure de blocage 75 vers l'extérieur du dispositif 10, de sorte que ladite patte supérieure de blocage 75 reçoit en appui une extrémité d'un bras 76 du plongeur 46. Le ressort 62 rappelant le plongeur 46 vers le bas, la patte 76 du plongeur est en appui stable sur la patte supérieure de blocage 75 des leviers d'indexation en dégagement 71.

Lors de la réintroduction (non représentée) du pied 34 dans la glissière 30, la patte d'appui 73 est ramenée vers le plan A, la patte supérieure d'indexation 75 est écartée vers l'extérieur du dispositif 10, et le bras 76 du plongeur 46 est relâché de sorte que le plongeur est libre de descendre en fond de glissière 30 sous l'action du ressort de rappel 62.

La patte d'appui 73 est particulièrement avantageuse car elle permet de faciliter la réintroduction du dispositif et évite que les pattes inférieures 54 des leviers 52 ne se détériorent suite à plusieurs actions "en force" sur les faces supérieures 15 des ailes 14.

D'une façon analogue à celle décrite illustrée aux figures 2 à 6, les figures 9 à 12 présentent le fonctionnement d'une variante de l'invention.

Dans cette configuration, le plongeur 46 présente des bras supérieurs 78 qui sont horizontaux. Ces bras supérieurs 78 sont destinés à coopérer avec des pattes supérieures 80 des leviers 52, les pattes inférieures 54 des leviers 52 présentant une configuration sensiblement analogue à celle précédemment décrite. Les pattes supérieures 80 des leviers 52 présentent un profil en S comportant de bas en haut une zone de contact inférieure 82, de réglage longitudinal, une zone de contact intermédiaire 84, de retenue, et zone de contact supérieure 88, de déverrouillage. Les zones 82, 84, et 88 sont orientées vers le plan médian A du dispositif 10 et coopèrent avec les extrémités arrondies 86 des bras 78 du plongeur 46.

D'une façon analogue au dispositif 10 précédemment décrit, le ressort de rappel 62, conformément à la figure 9, maintient le plongeur 46 en position basse lorsque le dispositif 10 est en position verrouillée. Les touches 86 des bras 78 du plongeur 46 sont alors reçues entre les pattes supérieures 80 sur la zone de contact inférieure 82, et les pattes supérieures 80 des leviers 52 sont maintenues dans une position rapprochée du plan médian A du dispositif 10 de sorte que les pattes inférieures 54 des leviers 52 sont écartées et permettent le contact entre les parties actives inférieures 55 des leviers d'une part, les faces internes 56 et les angles arrondis 17 des ailes 14 d'autre part.

Comme le montre la figure 10, lorsque l'utilisateur agit sur la tige de commande 44 du plongeur 46 suivant un mouvement de translation vertical vers le haut en surmontant l'effort antagoniste du ressort 62, les extrémités 86 glissent le long des zones de contact inférieures 82 sans écarter les pattes supérieures 80 des leviers 52, de sorte que l'ergot 70 du plongeur quitte la crémaillère 16, représentée ici suivant le mode de réalisation de la figure 1. Le pied 34 peut alors être déplacé longitudinalement tout en étant retenu verticalement.

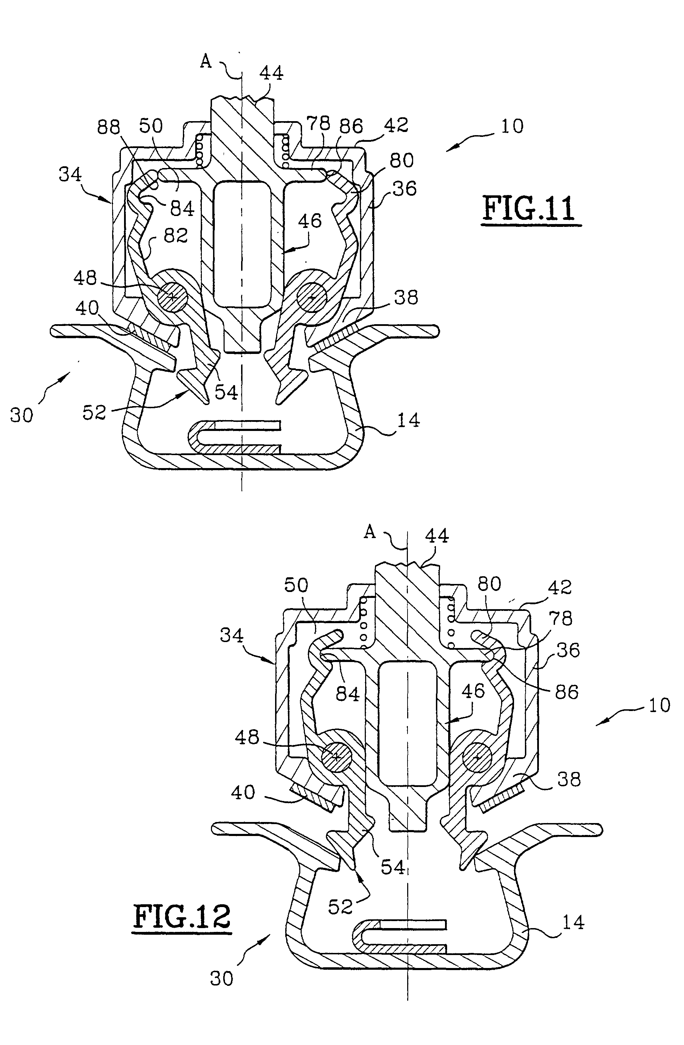

Comme le montre la figure 11, lorsque l'utilisateur poursuit le mouvement vers le haut de la tige de commande 44 du plongeur 46, les extrémités 86 des bras 78 du plongeur parviennent aux zones de contact supérieures 88 et écartent les pattes supérieures 80 des leviers 52 de sorte que les pattes inférieures 54 des leviers sont ramenées vers le plan médian A du dispositif 10 et n'immobilisent plus le pied 34 verticalement. Le boîtier 36 peut alors être extrait de la glissière 30, l'utilisateur tirant sur la tige de commande 44 pour extraire le pied 34 de la glissière 30.

Comme l'illustre la figure 12, en relâchant la tige de commande 44, les extrémités 86 descendent dans les zones de contact inférieures 84, conformées en crans de retenue, pour maintenir les pattes inférieures 54 des leviers 52 dans une position demi-ouverte favorisant une réintroduction ultérieure.

Cette configuration est particulièrement avantageuse car elle permet de réaliser une indexation de la tige de commande 44 tout en simplifiant les formes des leviers 52.

En effet la forme simplifiée des leviers 52 permet favorablement de réduire les coûts de fabrication de tels leviers, et par conséquent de réduire le coût total du dispositif 10.

Enfin, pour réinsérer le pied 34 dans la glissière 30, l'utilisateur doit seulement pousser le pied 34 dans la glissière 30. Les pattes inférieures 54 des leviers 52 se rapprochent alors transversalement pour faciliter l'introduction du pied 34, et les zones de contact inférieures 84 s'écartent en relâchant les extrémités 86, ce qui a pour conséquence de permettre au ressort 62, précédemment décrit en référence à la figure9, de rappeler le plongeur 46 vers le bas jusqu'à ce que l'ergot 70 pénètre dans la crémaillère 16.

La figure 13 est un exemple de réalisation industrielle qui permet de mieux apprécier la simplicité de réalisation du dispositif, présenté dans un mode de réalisation des leviers 52 conforme aux enseignements de la figure 3, qui sont réalisés à partir de profilés. Dans ce mode de réalisation, le plongeur 46 est aussi réalisé à partir d'un profilé, et le trou 43 est remplacé par une fente permettant de laisser passer une tige de commande 44 en forme de plaque. Le ressort 62 ( non représenté) peut être un ressort spiral prenant appui sur la face supérieure 66 du plongeur 46 et enroulé autour d'une tige 90, décrite ci-dessous.

Du point de vue du procédé de fabrication, cette solution est particulièrement avantageuse car elle permet de tronçonner pour chacune de ces pièces une barre de grande longueur en petits éléments, ce qui permet de réduire sensiblement les coûts de fabrication.

Il en est de même du boîtier 36, qui est quant à lui réalisé à partir de demi boîtiers 36A et 36 B, réalisés en deux tôles complémentaires découpées et pliées, assemblées par l'intermédiaire des axes longitudinaux 48, montés serrés dans les deux demi boîtiers 36, et de la tige transversale 90 qui est monté serrée dans des trous transversaux alignés 92 portés par les deux demis boîtiers 36A et 36B. Le pied 34 peut être ainsi assemblé très simplement par un procédé automatisé, ce qui est un gage de faibles coûts de fabrication.

Enfin, les deux variantes du même dispositif 10 sont particulièrement avantageuses car elles proposent un dispositif 10 simple d'emploi et présentant une résistance supérieure à l'arrachement du fait du décalage vertical entre le plan d'appui du pied 34 et le plan d'accrochage de l'ergot 70.

## Revendications

1. Dispositif (10) pour le réglage de la position longitudinale, et le blocage en position réglée, sur le plancher horizontal de l'habitacle d'un véhicule automobile équipé de deux glissières (11) parallèles, d'un sous-ensemble, notamment d'un siège de véhicule automobile, comportant des pieds (34) d'orientation sensiblement verticale reçus en coulissement longitudinal par les glissières (11), dont au moins un pied (34) comporte des leviers (52) de guidage des déplacements longitudinaux en position réglée, pivotant au voisinage de leur extrémité supérieure autour d'un axe longitudinal (48) d'articulation porté par le pied (34), et du type dans lequel l'extrémité inférieure du pied (34) est équipée d'un plongeur (46) mobile verticalement et commandant les déplacements transversaux des leviers (52) entre :
- une première position extrême, dite d'engagement ou de dégagement, dans laquelle les deux leviers (52) de verrouillage, à action symétrique et opposée par rapport à un plan longitudinal médian (A), sont dans une position escamotée vers l'intérieur dans laquelle leur encombrement transversal permet l'introduction ou l'extraction verticale du pied (34) dans la glissière (30) à travers une fente (79) longitudinale médiane de cette dernière délimitée par deux ailes supérieures (14) longitudinales et parallèles de la glissière (30) ;
- et une seconde position extrême, dite de verrouillage, dans laquelle les deux leviers (52) de verrouillage s'étendent chacun transversalement vers l'extérieur en regard d'une portion interne ( 17, 56) de l'une des ailes (14) supérieures de glissière (30) avec laquelle ils coopèrent par accrochage, pour immobiliser verticalement le pied (34) par rapport à la glissière (30) ;
- en passant par au moins une position intermédiaire, dite de réglage, dans laquelle les deux leviers (52) de verrouillage s'étendent chacun transversalement vers l'extérieur en regard de ladite portion interne (17, 56) de l'une des ailes (14) supérieures de la glissière (30), pour retenir verticalement le pied (34) par rapport à la glissière (30) et permettre des déplacements longitudinaux du pied (34) par rapport à la glissière (30),
**caractérisé en ce que** le plongeur (46) comporte à son extrémité inférieure un ergot (70) qui est reçu entre des dents (20) d'une crémaillère (16,19,72) formée dans le fond de la glissière (30) pour immobiliser longitudinalement le pied (34) en position de verrouillage.

2. Dispositif (10) selon l'une quelconque des revendications précédentes, **caractérisé en ce que** la crémaillère (34) est rapportée et est une pièce (16,19,72) en tôle, fixée par des vis (74), des pions (29) ou par soudage (18) sur le fond de la glissière (30).

3. Dispositif (10) selon la revendication 2, **caractérisé en ce que** le plongeur (46) comporte deux bras (76) coudés vers le bas, symétriques par rapport au plan longitudinal médian (A), et coopérant chacun avec deux pattes ( 58, 60 ) de chaque levier de verrouillage pour commander leur rotation autour de leur axe longitudinal (48).

4. Dispositif (10) selon la revendication 3, **caractérisé en ce que** chaque levier (52) comporte une patte supérieure longue (58) et coudée vers le plongeur (46) dont une face en regard du plongeur (46) est repoussée vers l'extérieur par une face extérieure du bras (76) du plongeur (46) pour ramener vers l'intérieur une patte inférieure (54) du levier (52) correspondant à une position d'engagement ou de dégagement du pied (34).

5. Dispositif (10) selon la revendication 4, **caractérisé en ce que** chaque levier (52) comporte une patte intermédiaire courte (60) et droite dont une face opposée au plongeur (46) est tirée vers l'intérieur par une face intérieure du bras (76) du plongeur (46) pour amener vers l'extérieur du pied la patte inférieure (54) du levier (52) en position de réglage ou de verrouillage.

6. Dispositif (10) selon la revendication 5, **caractérisé en ce que** la patte intermédiaire courte (60) et droite du levier (52) est bloquée verticalement par un coude (77) du bras (76) du plongeur (46) pour maintenir la patte intermédiaire (60) ramenée vers l'intérieur de sorte que la patte inférieure (54) du levier (52) est maintenue repoussée vers l'extérieur lorsque l'ergot (70) du plongeur est reçu entre les dents (20) de la crémaillère (16,19,72) pour maintenir le pied (34) en position de verrouillage.

7. Dispositif (10) selon l'une quelconque des revendications précédentes, **caractérisé en ce qu'**il comporte au moins un loquet de blocage en dégagement (71), qui s'étend dans un plan transversal décalé axialement par rapport aux leviers (52),qui est monté pivotant au voisinage de sa partie centrale autour d'un axe parallèle à l'axe longitudinal (48) d'articulation des leviers (52), qui est rappelé élastiquement vers une position de repos, et qui comporte une patte inférieure de commande prenant appui, lorsque le pied (34) est dans la glissière (30), sur une face supérieure (15) d'une aile (14) pour amener en position escamotée vers le plan longitudinal médian (A) une patte supérieure de blocage (75) qui , dans la position de repos s'étend en regard d'une portion d'un bras (76) du plongeur (34), pour le bloquer en position haute.

8. Dispositif (10) selon la revendication 2, **caractérisé en ce** le plongeur comporte deux bras horizontaux (78), symétriques par rapport au plan longitudinal médian (A), et coopérant avec des pattes supérieures (80) des leviers (52) de verrouillage pour commander leur rotation autour de leur axe longitudinal (48) et leur déplacement transversal.

9. Dispositif (10) selon la revendication 8, **caractérisé en ce que** les leviers (52) comportent les pattes supérieures (80) dont des faces en regard du plongeur sont chacune munie de trois zones de contact supérieure (88), intermédiaire (84) et inférieure (82), correspondant à trois positions transversales des pattes inférieures (54) des leviers (52) lorsque des touches (86) situées aux extrémités des bras (78) du coulisseau (46) sont en appui sur lesdites zones de contact (82, 84, 88).

10. Dispositif (10) selon la revendication 9, **caractérisé en ce que**, lorsque les touches (86) des bras (78) du coulisseau (46) y sont en appui,
la zone de contact supérieure (88), située aux extrémités supérieures des pattes supérieures (80) des leviers (52), correspond à un déplacement vers l'extérieur des pattes supérieures (80) des leviers (52), et provoque le déplacement transversal vers l'intérieur des pattes inférieures (54) des leviers (52) pour extraire le pied (34),
la zone de contact intermédiaire (84), située au milieu des pattes supérieures (80) des leviers (52) correspond à un déplacement transversal intermédiaire des pattes supérieures (80) des leviers (52), et positionne les pattes inférieures (54) des leviers (52) suivant une position transversale intermédiaire pour permettre le déplacement longitudinal du pied (34)) en l'immobilisant verticalement,
la zone de contact inférieure (82), située aux extrémités inférieures des pattes supérieures (80) des leviers (52), correspond à un déplacement transversal vers l'intérieur des pattes supérieures (80) des leviers (52), et provoque le déplacement vers l'extérieur des pattes inférieures (54) des leviers (52) pour immobiliser verticalement le pied (34) quand l'ergot du coulisseau (70) est reçu entre les dents (22) de la crémaillère (16, 19, 72).

11. Dispositif (10) selon l'une quelconque des revendications précédentes, **caractérisé en ce que** la patte inférieure (54) de chaque levier de verrouillage comporte une partie inférieure active (55) qui est de profil longitudinal complémentaire du profil de la portion interne (17, 56 ) d'une aile (14) de la glissière (30).

12. Dispositif (10) selon la revendication 11, **caractérisé en ce que** la partie inférieure active (55) de la patte inférieure (54) de chaque levier (52) est conformée en un crochet qui coopère avec la portion interne d'accrochage (17,56) de l'aile (14) pour immobiliser le pied (34) verticalement.

13. Dispositif (10) selon l'une quelconque des revendications précédentes, **caractérisé en ce que** les leviers (52) de verrouillage sont rappelés élastiquement vers leur position extrême de verrouillage par un ressort (62) qui rappelle le coulisseau (46) vers le bas.

14. Dispositif (10) selon l'une quelconque des revendications précédentes, **caractérisé en ce que** la glissière (30), les leviers (52), et le plongeur (46) sont des pièces réalisées à partir de profilés tronçonnés à la longueur adéquate.

## Patentansprüche

1. Vorrichtung (10) für die Einstellung der longitudinalen Position und die Blockierung in eingestellter Position an einem horizontalen Boden des Karosseriegehäuses eines Kraftfahrzeugs, welches mit zwei parallelen Gleitschienen (11) ausgestattet ist, einer Untergesamtheit, insbesondere eines Kraftfahrzeugsitzes, wobei sie Füße (34) einer im Wesentlichen vertikalen Ausrichtung aufweist, die in longitudinalem Gleiten durch die Gleitschienen (11) aufgenommen werden, von denen mindestens ein Fuß (34) Führungshebel (52) der longitudinalen Verstellungen in eingestellter Position aufweist, wobei sie in der Nähe ihres oberen Endes um eine longitudinale Anlenkungsachse (48) schwenken, welche durch den Fuß (34) getragen ist, und von dem Typ, in welchen das untere Ende des Fußes (34) mit einem vertikal beweglichen Tauchkolben (46) ausgestattet ist, und wobei er die transversalen Verstellungen der Hebel (52) steuert zwischen:
- einer ersten extremen Position, bezeichnet als Eingriffs- oder Freigabeposition, in welcher die zwei Verriegelungshebel (52) mit gegenüber einer longitudinalen Ebene (A) symmetrischer und gegenüberliegender Wirkung in einer in Richtung nach innen eingezogenen Position sind, in welcher ihr transversaler Raumbedarf das vertikale Einführen oder Herausbringen des Fußes (34) in die Gleitschiene (30) über einen longitudinalen, mittleren Spalt (79) dieser letzteren, welcher durch zwei longitudinale und parallele obere Flügel (14) der Gleitschiene (30) begrenzt ist, erlaubt;
- und einer zweiten extremen Position, bezeichnet als Verriegelungsposition, in welcher die zwei Verriegelungshebel (52) sich jeder transversal in Richtung nach außen bezüglich einem inneren Abschnitt (17, 56) des einen der oberen Flügel (14) der Gleitschiene (30), mit welcher sie durch Einhaken zusammenwirken, erstreckt, um vertikal den Fuß (34) im Verhältnis zu der Gleitschiene (30) festzusetzen;
- beim Hindurchgehen durch mindestens eine Zwischenposition, bezeichnet als Einstellposition, in welcher die zwei Verriegelungshebel (52) sich jeder transversal in Richtung nach außen gegenüber dem inneren Abschnitt (17, 56) von einem der oberen Flügel (14) der Gleitschiene (30) erstrecken, um vertikal den Fuß (34) im Verhältnis zu der Gleitschiene (30) festzuhalten, und um longitudinale Verstellungen des Fußes (34) im Verhältnis zur Gleitschiene (30) zu erlauben,
**dadurch gekennzeichnet, dass**
der Tauchkolben (46) an seinem unteren Ende einen Vorsprung (70) aufweist, welcher zwischen den Zähnen (20) einer Zahnschiene (16, 19, 72), welche an dem Boden der Gleitschiene (30) gebildet ist, aufgenommen wird zum longitudinalen Festsetzen des Fußes (34) in der Verriegelungsposition.

2. Vorrichtung (10) gemäß irgendeinem der vorhergehenden Ansprüche, **dadurch gekennzeichnet, dass** die Zahnstange (34) angefügt ist und ein Teil aus Blech (16, 19, 72) ist, welches über Schrauben (74), Klötze (29) oder durch Schweißen (18) an dem Boden der Gleitschiene (30) befestigt ist.

3. Vorrichtung (10) gemäß Anspruch 2, **dadurch gekennzeichnet, dass** der Tauchkolben (46) zwei nach unten abgewinkelte Arme (76) aufweist, symmetrisch im Verhältnis zur longitudinalen Mittelebene (A), und wobei jeder mit zwei Lappen (58, 60) von jedem Verriegelungshebel zum Steuern ihrer Drehung um ihre longitudinale Achse (58) zusammenwirkt.

4. Vorrichtung (10) gemäß Anspruch 3, **dadurch gekennzeichnet, dass** jeder Hebel (52) einen oberen, langen Lappen (58) aufweist, und welcher in Richtung zu dem Tauchkolben (46) abgewinkelt ist, von dem eine Fläche gegenüber dem Tauchkolben (46) in Richtung nach außen über eine äußere Fläche des Armes (76) des Tauchkolbens (46) zurückgestoßen wird zum Zurückbringen in Richtung nach innen eines unteren Lappens (54) des Hebels (52), wobei dies einer Eingriffs- oder Freigabeposition des Fußes (34) entspricht.

5. Vorrichtung (10) gemäß Anspruch 4, **dadurch gekennzeichnet, dass** jeder Hebel (52) einen kurzen und geraden Zwischenlappen (60) aufweist, von dem eine Fläche gegenüberliegend dem Tauchkolben (46) in Richtung nach innen gezogen wird über eine untere Fläche des Armes (76) des Tauchkolbens (46) zum Verstellen des unteren Lappens (54) des Hebels (52) in Einstellungsposition oder in Verriegelungsposition in Richtung nach außen des Fußes.

6. Vorrichtung (10) gemäß Anspruch 5, **dadurch gekennzeichnet, dass** der kurze und gerade Zwischenlappen (60) des Hebels (52) vertikal durch ein Winkelstück (77) des Armes (76) des Tauchkolbens (46) blockiert ist zum Halten des Zwischenlappens (60), welcher in Richtung nach innen zurückgebracht ist, in einer Art und Weise, dass der untere Lappen (54) des Hebels (52) zurückgestoßen in Richtung nach außen gehalten wird, wenn der Vorsprung (70) des Tauchkolbens zwischen den Zähnen (20) der Zahnstange (16, 19, 72) aufgenommen wird zum Halten des Fußes (34) in Verriegelungsposition.

7. Vorrichtung (10) gemäß irgendeinem der vorherigen Ansprüche, **dadurch gekennzeichnet, dass** sie mindestens eine Verriegelungsklinke (71) in Freigabe aufweist, welche sich in einer transversalen, axial im Verhältnis zu den Hebeln (52) versetzten Ebene erstreckt, welche schwenkend in der Nähe ihres zentralen Teils um eine Achse parallel zu der longitudinalen Anlenkungsachse (48) der Hebel (52) montiert ist, welche elastisch in Richtung zu einer Ruheposition zurückgeholt ist, und welche einen unteren Steuerlappen aufweist, der sich auf einer oberen Fläche (15) eines Flügels (14) abstützt, wenn der Fuß (34) in der Gleitschiene (30) ist, um einen oberen Blockierlappen (75) in eingezogene Position in Richtung zu der longitudinalen Mittelebene (A) zu verstellen, welcher sich gegenüber einem Arm (76) des Tauchkolbens (34) in der Ruheposition erstreckt, um ihn in oberer Position zu blockieren.

8. Vorrichtung (10) gemäß Anspruch 2, **dadurch gekennzeichnet, dass** der Tauchkolben zwei horizontale Arme (78) aufweist, welche im Verhältnis zur longitudinalen Mittelebene (A) symmetrisch sind, und wobei sie mit oberen Lappen (80) der Verriegelungshebel (52) zum Steuern ihrer Drehung um ihre longitudinale Achse (48) und ihrer transversalen Verstellung zusammenwirken.

9. Vorrichtung (10) gemäß Anspruch 8, **dadurch gekennzeichnet, dass** die Hebel (52) obere Lappen (80) aufweisen, deren Flächen gegenüber dem Tauchkolben jede mit drei oberen (88), mittleren (84) und unteren (82) Kontaktzonen ausgestattet sind, wobei sie drei transversalen Positionen der unteren Lappen (54) der Hebel (52) entsprechen, wenn Anlageflächen (86), die an den Enden der Arme (78) des Gleitstücks (46) angeordnet sind, gegen die Kontaktzonen (82, 84, 88) anliegen.

10. Vorrichtung (10) gemäß Anspruch 9, **dadurch gekennzeichnet, dass**, wenn die Anlageflächen (86) der Arme (78) des Gleitstücks (46) dort in Anlage sind,
die obere Kontaktzone (88), welche an den oberen Enden der oberen Lappen (80) der Hebel (52) angeordnet ist, einer Verstellung in Richtung nach außen der oberen Lappen (80) der Hebel (52) entspricht und die transversale Verstellung in Richtung nach innen der unteren Lappen (54) der Hebel (52) hervorruft, um den Fuß (34) herauszuziehen,
die Zwischenkontaktzone (84), welche in der Mitte der oberen Lappen (80) der Hebel (52) angeordnet ist, einer transversalen Zwischenverstellung der oberen Lappen (80) der Hebel (52) entspricht und die unteren Lappen (54) der Hebel (52) gemäß einer transversalen Zwischenposition positioniert, um die longitudinale Verstellung des Fußes (34) unter seinem vertikalen Festsetzen zu erlauben,
die untere Kontaktzone (82), welche an den unteren Enden der oberen Lappen (80) der Hebel (52) angeordnet ist, einer transversalen Verstellung in Richtung nach innen der oberen Lappen (80) der Hebel (52) entspricht, und die Verstellung in Richtung nach außen der unteren Lappen (54) der Hebel (52) hervorruft, um vertikal den Fuß (34) festzusetzen, wenn der Vorsprung des Gleitstücks (70) zwischen den Zähnen (22) der Zahnstange (16, 19, 72) aufgenommen ist.

11. Vorrichtung (10) gemäß irgendeinem der vorherigen Ansprüche, **dadurch gekennzeichnet, dass** der untere Lappen (54) von jedem Verriegelungshebel einen unteren, aktiven Teil (55) aufweist, welcher von einem longitudinalen, komplementären Profil zu dem Profil des inneren Abschnitts (17, 56) eines Flügels (14) der Gleitschiene (30) ist.

12. Vorrichtung (10) gemäß Anspruch 11, **dadurch gekennzeichnet, dass** der untere, aktive Teil (55) des unteren Lappens (54) von jedem Hebel (52) als ein Haken geformt ist, welcher mit dem inneren Einhakabschnitt (17, 56) des Flügels (14) zum vertikalen Festsetzen des Fußes (34) zusammenwirkt.

13. Vorrichtung (10) gemäß irgendeinem der vorherigen Ansprüche, **dadurch gekennzeichnet, dass** die Verriegelungshebel (52) elastisch in Richtung ihrer extremen Verriegelungsposition durch eine Feder (62) zurückgeholt werden, welche das Gleitstück (46) in Richtung nach unten zurückstellt.

14. Vorrichtung (10) gemäß irgendeinem der vorherigen Ansprüche, **dadurch gekennzeichnet, dass** die Gleitschiene (30), die Hebel (52) und der Tauchkolben (46) Teile sind, welche ausgehend von auf die passende Länge gestückelten Profilen realisiert sind.

## Claims

1. Device (10) for adjusting the longitudinal position of a sub-assembly, in particular a seat of an automotive vehicle, and for locking it in the adjusted position on the horizontal floor of the passenger compartment of an automotive vehicle equipped with two parallel slide rails (11), having approximately vertical orientation legs (34) longitudinally slidably held by the slide rails (11), at least one leg (34) of which has levers (52) for guiding longitudinal movements and for locking in the adjusted position, pivoting adjacent to their upper end around a longitudinal hinge rod (48) held by the leg (34), and of the type in which the lower end of the leg (34) is equipped with a vertical mobile plunger (46) that controls the transverse movements of the levers (52) between:
- a first extreme position, known as the engagement or disengagement position, in which the two locking levers (52), with symmetrical and opposite action relative to a longitudinal mid-plane (A), are in an inwardly retracted position in which their transverse footprint allows for the vertical insertion or removal of the leg (34) in the slide rail (30) through a median longitudinal elongated hole (79) in the latter delimited by two parallel upper longitudinal flanges (14) of the slide rail (30);
- and a second extreme position, known as the locked position, in which the two locking levers (52) each extend transversely outwards opposite an inner section (17, 56) of one of the upper flanges (14) of the slide rail (30), with which they cooperate by meshing, to longitudinally and vertically immobilize the leg (34) relative to the slide rail (30);
- through at least one intermediate position, known as the adjustment position, in which the two locking levers (52) each extend transversely outwards opposite the inner section (17, 56) of one of the upper flanges (14) of the slide rail (30), to vertically hold the leg (34) relative to the slide rail (30) and allow for longitudinal movements of the leg (34) relative to the slide rail (30);
**characterized in that** the plunger (46) has on its lower end a stub (70) that is held between teeth (20) on a rack (16, 19, 72) formed in the base of the slide rail (30) to longitudinally immobilize the leg (34) in locked position.

2. Device (10) according to any one of the previous claims, **characterized in that** the rack (34) is mounted and is a sheet-metal part (16, 19, 72), secured by screws (74), pins (29) or welding (18) to the base of the slide rail (30).

3. Device (10) according to claim 2, **characterized in that** the plunger (46) has two arms (76) bent downwards, which are symmetrical relative to the longitudinal mid-plane (A) and each work in conjunction with two arms (58, 60) of each locking lever to control their rotation around their longitudinal rod (48).

4. Device (10) according to claim 3, **characterized in that** each lever (52) has a long upper arm (58) that is bent towards the plunger (46) one surface of which, opposite the plunger (46), is pushed outwards by an outer surface of the arm (76) of the plunger (46) to pull inwards a lower foot (54) of the lever (52), corresponding to an engagement or disengagement position of the leg (34).

5. Device (10) according to claim 4, **characterized in that** each lever (52) has a short straight intermediate arm (60) one surface of which, opposite the plunger (46), is pulled inwards by an inner surface of the arm (76) of the plunger (46) to push the lower foot (54) of the lever (52) towards the outside of the leg into adjustment or locked position.

6. Device (10) according to claim 5, **characterized in that** the short straight intermediate arm (60) of the lever (52) is vertically locked by an elbow (77) in the arm (76) of the plunger (46) to keep the intermediate arm (60) pulled inwards so that the lower foot (54) of the lever (52) is kept pushed outwards when the stub (70) of the plunger is held between the teeth (20) of the rack (16, 19, 72) to keep the leg (34) in locked position.

7. Device (10) according to any one of the previous claims, **characterized in that** it has at least one disengagement locking release latch (71), which extends in a transverse plane axially offset relative to the levers (52), is mounted pivotably adjacent to its centre section around an axis parallel to the longitudinal hinge rod (48) of the levers (52), is elastically returned to a resting position and has a lower control foot which rests, when the leg (34) is in the slide rail (30), on an upper surface (15) of a flange (14) to bring an upper locking arm (75) that, in its resting position, extends opposite a section of an arm (76) on the plunger (34) to lock it in the raised position, into a position in which it is retracted towards the longitudinal mid-plane (A).

8. Device (10) according to claim 2, **characterized in that** the plunger has two horizontal arms (78) that are symmetrical relative to the longitudinal mid-plane (A) and work in conjunction with the upper arms (80) of the locking levers (52) to control their rotation around their longitudinal rod (48) and their transverse movement.

9. Device (10) according to claim 8, **characterized in that** the levers (52) have upper arms (80) each of the surfaces of which, opposite the plunger, is provided with three contact zones: upper (88), intermediate (84) and lower (82), corresponding to three transverse positions of the lower feet (54) of the levers (52) when the tips (86) situated at the ends of the arms (78) of the slider (46) are resting on the contact zones (82, 84, 88).

10. Device (10) according to claim 9, **characterized in that**, when the tips (86) of the arms (78) of the slider (46) are resting on it,
the upper contact zone (88), situated at the upper ends of the upper arms (80) of the levers (52), corresponds to an outward movement of the upper arms (80) of the levers (52) and causes the inward transverse movement of the lower feet (54) of the levers (52) to remove the leg (34),
the intermediate contact zone (84), situated in the middle of the upper arms (80) of the levers (52), corresponds to an intermediate transverse movement of the upper arms (80) of the levers (52), and positions the lower feet (54) of the levers (52) in an intermediate transverse position to allow for the longitudinal movement of the leg (34) whilst immobilizing it vertically,
the lower contact zone (82), situated at the lower ends of the upper arms (80) of the levers (52), corresponds to an inward transverse movement of the upper arms (80) of the levers (52), and causes the outward movement of the lower feet (54) of the levers (52) to vertically immobilize the leg (34) when the stub (70) of the slider is held between the teeth (22) of the rack (16, 19, 72).

11. Device (10) according to any one of the previous claims, **characterized in that** the lower foot (54) of each locking lever has an active lower part (55) with a longitudinal profile complementary to the profile of the inner section (17, 56) of a flange (14) of the slide rail (30).

12. Device (10) according to claim 11, **characterized in that** the active lower part (55) of the lower foot (54) of each lever (52) is shaped like a hook that works in conjunction with the inner meshing section (17, 56) of the flange (14) to vertically immobilize the leg (34).

13. Device (10) according to any one of the previous claims, **characterized in that** the locking levers (52) are elastically returned to their extreme locked position by a spring (62) which returns the slider (46) downwards.

14. Device (10) according to any one of the previous claims, **characterized in that** the slide rail (30), the levers (52) and the plunger (46) are parts made from sections cut to the appropriate length.
